# EUROPEAN PATENT SPECIFICATION

(11) **EP 2 615 024 B1**
(45) Date of publication and mention of the grant of the patent: **04.05.2016**
(21) Application number: 12151219.8
(22) Date of filing: 16.01.2012
(51) Int. Cl.: B62M 9/134, B62M 9/124

(54) **Speed adjusting device of a speed changer**
Drehzahleinstellvorrichtung eines Drehzahlwechslers
Dispositif d'ajustement de vitesse d'un changeur de vitesse

(43) Date of publication of application: 17.07.2013
(73) Proprietor: Lin, Chang Hui, Changhu (TW)
(72) Inventor: Lin, Chang Hui, Changhu (TW)
(74) Representative: Chaillot, Geneviève

(56) References cited:
- DE-A1- 10 100 782
- FR-A- 1 277 691

## Description

### BACKGROUND OF THE INVENTION

### Field of the Invention

The present invention relates to a speed adjusting device, and more particularly to a speed adjusting device of a speed changer being used in a middle speed changer and a rear speed changer of a bicycle.

### Description of the Prior Art

A conventional speed adjusting device of a speed changer of a bicycle is used to shift gears by using a cable connected with a speed changing mechanism and an actuating lever, wherein the actuating lever is actuated to drive the speed changing mechanism, thus shifting upward and downward. However, such a speed changing method will make the speed changing mechanism being actuated by the actuating lever so that the sprocket is shifted upward in one section merely without shifting upward in multi-section.

The German patent DE 101 00 782 describes a conventional speed adjusting device having a changer part formed as a changer bar. This has a guide bar, which has a pressure spring and is operated by a Bowden cable. The guide bar supports itself on one side on a head part supporting the Bowden cable, and on the other side on a changer sleeve, which is axially moved on the guide bar by the Bowden cable against the pressure spring. The guide bar has a long slot, and the remaining bar parts have semicircular sections and pass through the sleeve, where they define a guide bore. The present invention has arisen to mitigate and/or obviate the afore-described disadvantages.

### SUMMARY OF THE INVENTION

The primary object of the present invention is to provide a speed adjusting device of a speed changer which is capable of overcoming the shortcomings of the conventional speed adjusting device of a speed changer.

Further object of the present invention is to provide a speed adjusting device of a speed changer that is capable of eliminating a positioning error as a chainwheel of a sprocket displaces after bicycle's changing speed.

Another object of the present invention is to provide a speed adjusting device of a speed changer that is capable of shifting gears, shifting up, and shifting downward of the bicycle.

To obtain the above objectives, the present invention provides a rear speed changer as defined in claim 1.

### BRIEF DESCRIPTION OF THE DRAWINGS

Fig. 1 is a perspective view showing the exploded components of a speed adjusting device of a speed changer according to a preferred embodiment of the present invention;
Fig. 2 is a perspective view showing the assembly of the speed adjusting device of the speed changer according to the preferred embodiment of the present invention;
Fig. 3 is a cross sectional view showing the assembly of the speed adjusting device of the speed changer according to the preferred embodiment of the present invention;
Fig. 4 is a perspective view showing the operation of the speed adjusting device of the speed changer according to the preferred embodiment of the present invention;
Fig. 5 is another perspective view showing the operation of the speed adjusting device of the speed changer according to the preferred embodiment of the present invention;
Fig. 6 is also another perspective view showing the operation of the speed adjusting device of the speed changer according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

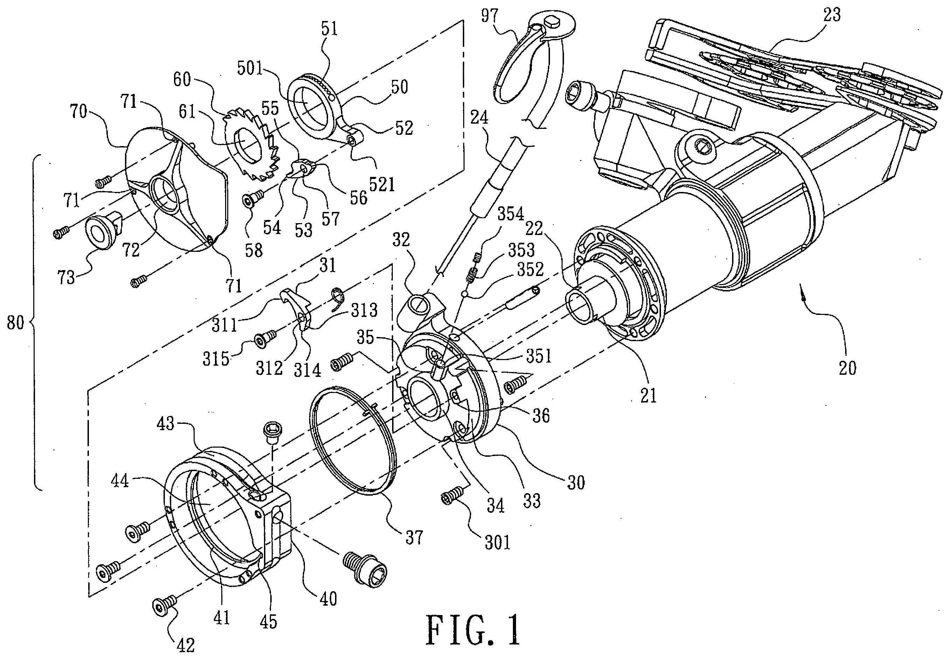

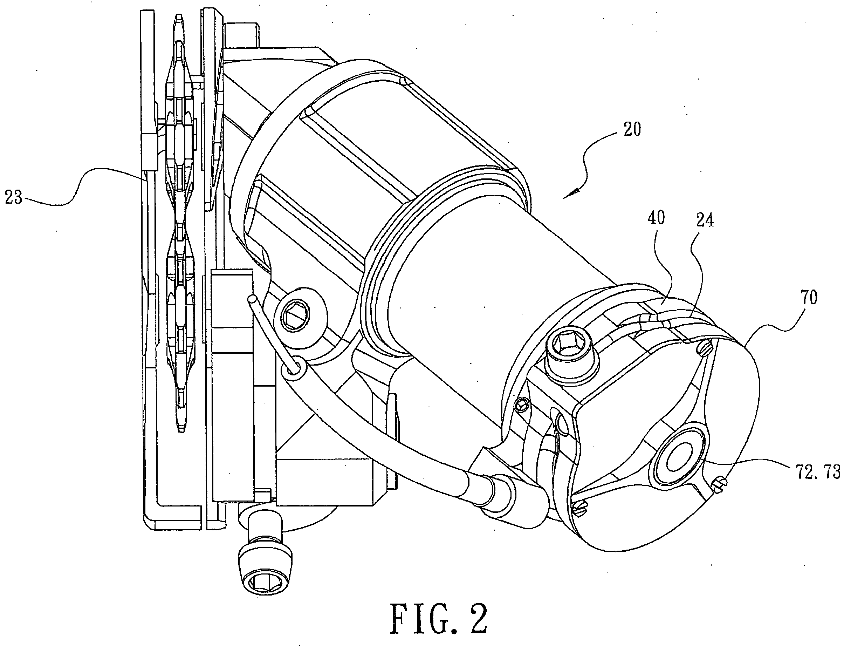

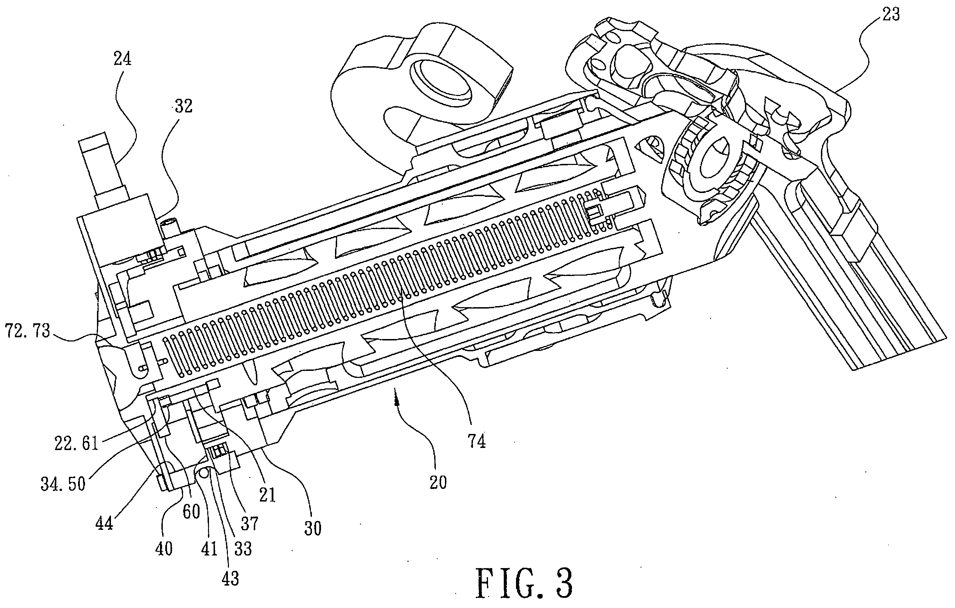

Referring to Figs. 1-6, a speed adjusting device of a speed changer in accordance with a preferred embodiment of the present invention is used in a middle speed changer 91 and a rear speed changer 20 of a bicycle, wherein a ratchet assembly 80, the middle speed changer 91, and the rear speed changer 20 are connected together, when the ratchet assembly 80 and the rear speed changer 20 is coupled, a base 30 is fitted and fixed on a first central spindle 21 of the rear speed changer 20 by using a bolt 301, and the first central spindle 21 includes a first oval shaft 22 disposed on a distal end thereof to retain with a first ratchet 60, wherein the first ratchet 60 is provide to roll so that the shaft 22 is rolled in a clockwise direction simultaneously, such that a link wheel 23 of the rear speed changer 20 is pushed outward so as to displace a chain which is engaged with the chain wheel 23 displaces on a chainwheel of a sprocket, thus shifting gears, shifting up, and shifting downward. The ratchet assembly 80 includes a front cover 70, the first ratchet 60, a ring member 50, a hook 31, an adjusting loop 40, a first returning spring 37, and the base 30, wherein the base 30 includes a first hole 302 fixed on a central portion thereof to insert the first central spindle 21 and a holder 33 extending from a front end thereof to connect with the adjusting loop 40, and the adjusting loop 40 includes a plurality of first screw bores to lock the front cover 70, and the front cover 70 includes a first orifice 72 formed on a central portion thereof to insert a first screw 73 so that a second returning spring 74 is hooked with the first screw 73 and is fixed in the rear speed changer 20, such that the front cover 70, the adjusting loop 40, the holder 33 are pressed on the rear speed changer 20.

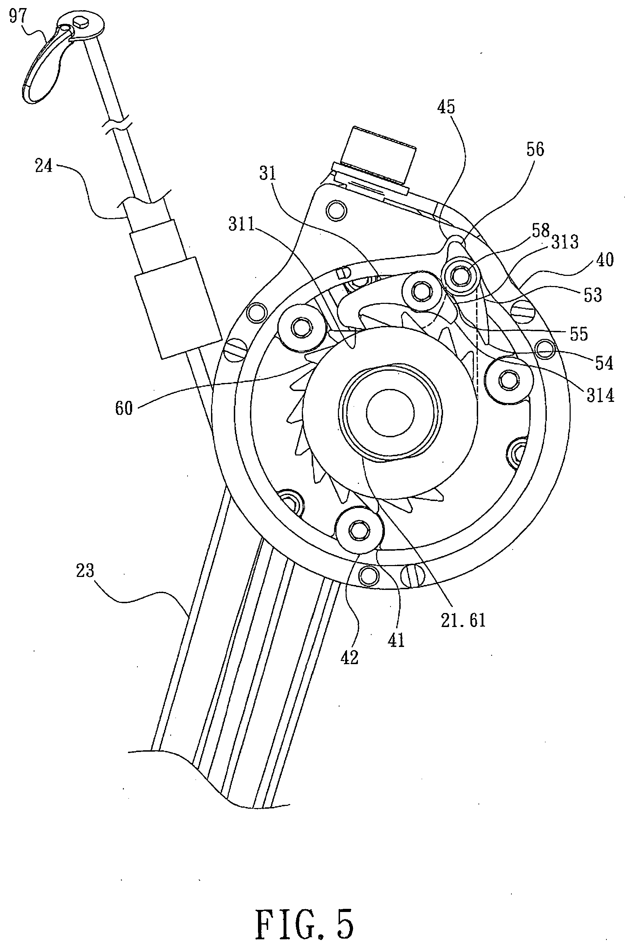

The first returning spring 37 is defined between the base 30 and the adjusting loop 40 to drive the adjusting loop 40 to rotate back to an original position. The base 30 includes a cable seat 32 disposed on an outer side thereof and the holder 33 and a fitting member 34, both of which extend outward from a front end of the base 30, the holder 33 includes a column 35 fixed on an outer side thereof, and the column 35 includes an aperture 351 to receive a ball 352 and a spring 353, and a second screw 354 is locked in the aperture 351 to fix the ball 352 and the spring 353 such that the ring member 50 is adjusted to return back to an initial speed by using a first opening 51. The base 30 also includes the adjusting loop 40 fitted thereon, and the fitting member 34 includes a ring member 50 fitted thereon, the adjusting loop 40 includes a shoulder 41 secured thereon, and a third screw 42 is locked in a second opening 331 of the holder 33 to be retained with the shoulder 41 of the adjusting loop 40, such that the adjusting loop 40 is retained on the holder 33 so as to prevent from disengagement from the holder 33. The adjusting loop 40 includes a slot 43 arranged on an outer side thereof to insert a cable 24 which is fixed by a fourth screw 92, and the adjusting loop 40 includes a second hole 44 disposed on a central position thereof, and the second hole 44 includes a groove 45 fixed at a suitable position of an outer side thereof and an inner space to receive the first ratchet 60, the first actuating lever 53, the ring member 50, and the hook 31. The first ratchet 60 includes an oval port 61 fixed on a central portion thereof to insert the shaft 22 of the rear speed changer 20, the first actuating lever 53 includes a head portion 54 disposed on a front end thereof, a pushing portion 55 secured on a middle section thereof, and a tail portion 56 attached on a rear end thereof to be retained in the groove 45, and the first actuating lever 53 includes a third hole 57 arranged on a middle section thereof to inert through the fifth screw 58 so that the first actuating lever 53 is locked on an axial mount 521 of a swing peg 52, and the ring member 50 includes a fourth hole 501 disposed on a central portion thereof, a fifth hole 51 fixed on an outer-diameter portion thereof, and the swing peg 52 and the axial mount 521 secured on a peripheral side thereof, the fourth hole 501 is fitted on the fitting member 34 of the base 30 so that the ring member 50 rotates leftward and rightward on the fitting member 34, the hook 31 includes a hooking portion 311 formed on a front end thereof, a second orifice 312 arranged on a rear side of a middle thereof, a distal tail 313 and a stopping portion 314, both of which are disposed on a rear end of the hook 31, wherein the hooking portion 311 of the hook 31 is retained on the first ratchet 60, and a sixth screw 315 is inserted through the second orifice 312 to retain the hook 31 on a projection 36 of the holder 33. The front cover 70 includes a number of second screw bores 71 disposed on a peripheral side thereof and the first orifice 72 formed on the central portion thereof, and the front cover 70 is locked on a front side of the adjusting loop 40 to cover the second hole 44, and the first screw 73 is inserted through the first orifice 72 to hook the second returning spring 74 in the rear speed changer 20 so that the front cover 70, the adjusting loop 40, the base 30 are biased against the speed changer 20 to eliminate a tolerance in assembly, such that the adjusting loop 40 is rolled to return back to an initial position by ways of the retuning spring 74, thus connecting all related components of the speed adjusting device together. As shown in Fig. 5, in operation, an second actuating lever 97 is moved more than a fixed angle, the cable 24 pulls the adjusting loop 40 so that the adjusting loop 40 moves toward a first largest angle to retain with the tail portion 56 of the groove 45, such that the tail portion 56 rotates along the fifth screw 58, and then the pushing portion 55 of the first actuating lever 53 pushes the distal tail 313 of the hook 31 so that the hooking portion 311 of the hook 31 disengages from the first ratchet 60, and the first central spindle 21 is rolled, thereafter the stopping portion 314 of the hook 31 stops the first ratchet 60, and the head portion 54 is inserted between the first ratchet 60 so that the first central spindle 21 can not rotate back to an original point in an anti-clockwise direction, then the second actuating lever 97 is moved toward a second largest angle to roll the adjusting loop 40 so that the first actuating lever 53 actuates the first ratchet 60 to rolls in a clockwise direction, and the first central spindle 21 rolls to actuate the rear speed changer 20 so as to change speed, such that the adjusting loop 40 is rolled at a second largest angle, hence the rear speed changer 20 will change its speed in a multilevel section.

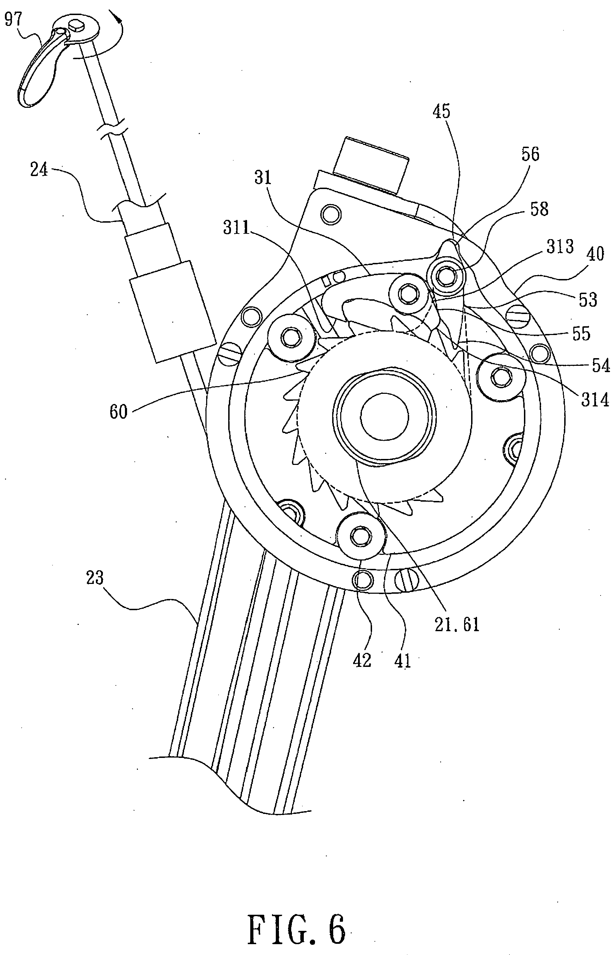

Referring to Fig. 6, when the second actuating lever 97 is moved less than a fixed angle, the cable 24 pulls the adjusting loop 40, and the tail portion 56 is actuated so that the first actuating lever 53 rotates along the fifth screw 58, and the pushing portion 55 of the first actuating lever 53 pushes the distal tail 313 of the hook 31 so that the hooking portion 311 of the hook 31 disengage from the first ratchet 60 to release the positioning of the first ratchet 60, thereafter the first ratchet 60 rotates back to a tooth in the anti-clockwise direction to be stopped by the stopping portion 314 of the hook 31 and the head portion 54, and the hooking portion 311 of the hook 31 hooks the first ratchet 60 so that the hook 31 is positioned, thereby rotating the second actuating lever 97 to be less than a fixed angle to moving back in one section.

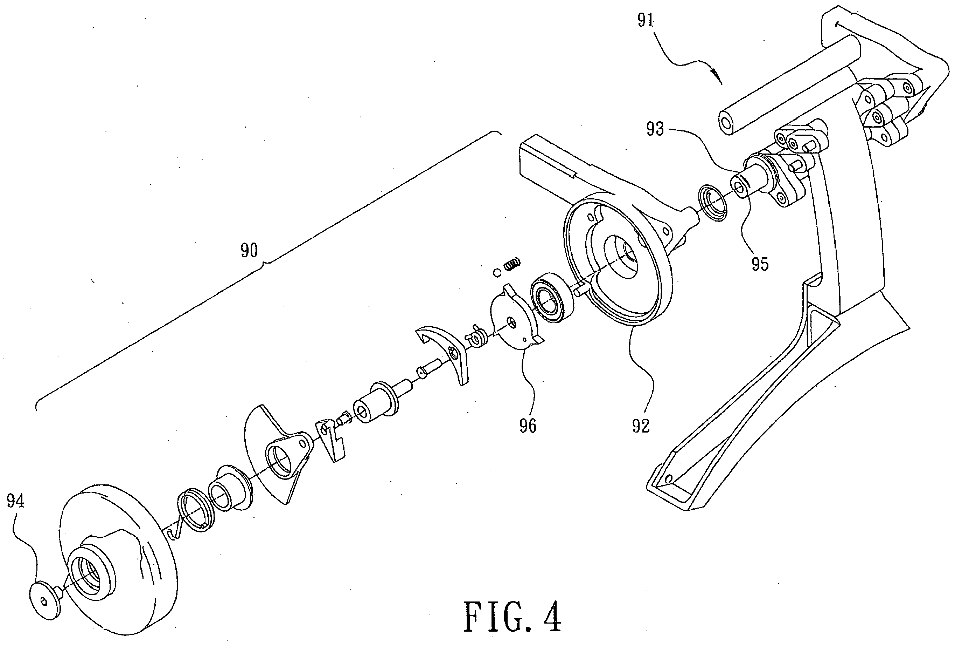

As illustrated in Fig. 4, when a speed-changing ratchet assembly 90 is connected with the middle speed changer 91, a bottom lip 92 is fitted onto a second central spindle 93 by using a seventh screw 94, and the second central spindle 93 of the middle speed changer 91 includes a second oval shaft 95 fixed on a distal end thereof to be retained with a second ratchet 96 so that the second ratchet 96 is rolled to roll the second oval shaft 95 simultaneously, increasing speed or decreasing speed.

While we have shown and described various embodiments in accordance with the present invention, it is clear to those skilled in the art that further embodiments may be made without departing from the scope of the present invention.

## Claims

1. A rear speed changer (20) of a bicycle, including a speed adjusting device, **characterized by** that fact the speed adjusting device comprises:
a base (30) including a first hole (302) fixed on a central portion thereof to insert a first central spindle (21) of the rear speed changer (20), a holder (33) and a fitting member (34) which extend from a front end of the base (30) to connect with an adjusting loop (40), and a ring member (50) fitted on the fitting member (34) so as to be able to rotate leftward and rightward on the fitting member (34), the adjusting loop (40) being retained on the holder (33), wherein the base (30) is fixed to the rear speed change (20), wherein the first central spindle (21) includes a first oval shaft (22) disposed on a distal end thereof, and wherein the ring member (50) includes a fourth hole (501) disposed on a central portion thereof, a fifth hole (51) fixed on an outer-diameter portion thereof, and a swing peg (52) and an axial mount (521) secured on a peripheral side thereof;
the adjusting loop (40) including a plurality of first screw bores locking with a front cover (70) and a second hole (44) defined on a central position thereof so as to accommodate a first ratchet (60), a first actuating lever (53), the ring member (50), and a hook (31), the first ratchet (60) including an oval port (61) fixed on a central portion thereof to insert the first oval shaft (22) so that a rotation of the first ratchet (60) can be transmitted to the first central spindle (21), the first actuating lever (53) being rotatably locked to the axial mount (521) of the ring member (50), the hook (31) being arranged to be able to engage and disengage the first ratchet (60) upon actuation by the first actuating lever (53), the second hole (44) including a groove (45) formed at a suitable position of an outer side thereof for receiving a tail portion (56) of the first actuating lever (53); and
the front cover (70) including a first orifice (72) formed on a central portion thereof to insert a first screw (73) so that a second returning spring (74) is hooked with the first screw (73) and is fixed in the rear speed changer (20) such that the front cover (70), the adjusting loop (40), the holder (33) are pressed on the rear speed changer (20);
wherein the base (30) includes a cable seat (32) disposed on an outer side thereof and through which a cable (24) is intended to pass in order to be fixed, at one end of the cable (24), to the adjusting loop (40), the other end of the cable (24) being fixed to a second actuating lever (97), and including the holder (33) and the fitting member (34), both of which extend outward from a front end of the base (30), the holder (33) includes a column (35) fixed on an outer side thereof, and the column (35) includes an aperture (351) to receive a ball (352) and a spring (353), a second screw (354) being locked in the aperture (351) to fix the ball (352) and the spring (353) such that the ring member (50) is adjusted to return back to an initial speed by using the fifth hole (51),
whereby, when said second actuating lever (97) is moved more than a fixed angle, said cable (24) pulls the adjusting loop (40), the adjusting loop (40) rotates and the tail portion (56), which is received then in the groove (45), rotates so that the first actuating lever (53) pushes the hook (31), which hook (31) disengages from the first ratchet (60) and the first ratchet (60), together with the first central spindle (21), is rolled to actuate the rear speed changer (20) so as to change speed,
whereby, when said second actuating lever (97) is moved less than a fixed angle, said cable (24) pulls the adjusting loop (40) and the tail portion (56) is actuated so that the first actuating lever (53) rotates to push the hook (31), which hook (31) disengages from the first ratchet (60) and the first ratchet (60), together with the first central spindle (21), rotates back in the anti-clockwise direction to actuate the rear speed changer (20) so as to change speed.

2. The rear speed changer as claimed in claim 1, wherein a first returning spring (37) is defined between the base (30) and the adjusting loop (40) to drive the adjusting loop (40) to rotate back to an original position.

3. The rear speed changer as claimed in claim 1, wherein the adjusting loop (40) includes a slot (43) arranged on an outer side thereof and a second hole (44) disposed on a central position thereof, and the second hole (44) includes the groove (45) fixed at a suitable position of an outer side thereof and an inner space to receive the first ratchet (60), the first actuating lever (53), the ring member (50), and the hook (31).

4. The rear speed changer as claimed in claim 1, wherein the hook (31) includes the hooking portion (311) formed on a front end thereof, a second orifice (312) arranged on a rear side of a middle thereof, a distal tail (313) and a stopping portion (314), both of which are disposed on a rear end of the hook (31).

5. The rear speed changer as claimed in claim 1, wherein the first actuating lever (53) includes a head portion (54) disposed on a front end thereof, a pushing portion (55) secured on a middle section thereof, and the tail portion (56) attached on a rear end thereof to be retained in the groove (45).

## Patentansprüche

1. Drehzahlwechsler (20) eines Fahrrades, einschließlich einer Drehzahleinstellvorrichtung, **gekennzeichnet dadurch, dass** die Drehzahleinstellvorrichtung folgendes umfasst:
eine Basis (30) einschließlich eines ersten Loches (302), das auf einem Mittelteil davon angebracht ist, um eine erste mittlere Spindel (21) des Drehzahlwechsler s (20) einzufügen, einen Halter (33) und ein Passelement (34), die von einem Vorderende der Basis (30) aus verlaufen, um mit einem Regelkreis (40) verbunden zu sein, und ein Ringelement (50), das auf dem Passelement (34) befestigt ist, um auf dem Passelement (34) nach links und nach rechts rotieren zu können, wobei der Regelkreis (40) auf dem Halter (33) gehalten wird, wobei die Basis (30) an dem Drehzahlwechsler (20) befestigt ist, wobei die erste mittlere Spindel (21) eine erste ovale Welle (22) umfasst, die auf einem Distalende davon angeordnet ist, und wobei das Ringelement (50) ein viertes Loch (501) umfasst, das auf einem Mittelteil davon angeordnet ist, wobei ein fünftes Loch (51) auf einem Außendurchmesserteil davon befestigt ist und ein Schwenkstift (52) und eine axiale Halterung (521) auf einer Randseite davon gesichert ist;
wobei der Regelkreis (40) eine Vielzahl von ersten Schraubenbohrungen umfasst, die mit einer vorderen Abdeckung (70) und einem zweiten Loch (44) schließen, auf einer mittleren Position davon definiert, um ein erstes Schaltrad (60) aufzunehmen, einen ersten Betätigungshebel (53), das Ringelement (50) und einen Haken (31), wobei das erste Schaltrad (60) eine ovale Durchlassöffnung (61) umfasst, die auf einem Mittelteil davon befestigt ist, um die erste ovale Welle (22) einzufügen, so dass eine Rotation des ersten Schaltrades (60) auf die erste mittlere Spindel (21) übertragen werden kann, wobei der erste Betätigungshebel (53) drehbar an die axialen Halterung (521) des Ringelements (50) arretiert ist und der Haken (31) in das erste Schaltrad (60) bei Betätigung durch den ersten Betätigungshebel (53) ein- und auskuppeln kann, wobei das zweite Loch (44) eine Nut (45) umfasst, die an einer geeigneten Position einer Außenseite davon zur Aufnahme eines Endstückteils (56) des ersten Betätigungshebels (53) gebildet ist; und
die vordere Abdeckung (70) eine erste Öffnung (72) umfasst, die auf einem Mittelteil davon gebildet ist, um eine erste Schraube (73) einzufügen, so dass eine zweite Rückgabefeder (74) mit der ersten Schraube (73) verhakt ist und in dem Drehzahlwechsler (20) befestigt ist, so dass die vordere Abdeckung (70), der Regelkreis (40) und der Halter (33) auf den Drehzahlwechsler (20) gedrückt werden;
wobei die Basis (30) eine Kabelaufnahme (32) umfasst, die auf einer Außenseite davon angeordnet ist und durch die ein Kabel (24) gehen soll, um an einem Ende des Kabels (24) an dem Regelkreis (40) und am anderen Ende des Kabels (24) an einem zweiten Betätigungshebel (97) befestigt zu werden, und den Haltern (33) und das Passelement (34) umfasst, die beide von einem Vorderende der Basis (30) nach außen verlaufen, wobei der Halter (33) eine Säule (35) umfasst, die an einer Außenseite davon befestigt ist, und die Säule (35) eine Öffnung (351) umfasst, um eine Kugel (352) und eine Feder (353) aufzunehmen, wobei eine zweite Schraube (354) in die Öffnung (351) arretiert ist, um die Kugel (352) und die Feder (353) zu befestigen, so dass das Ringelement (50) derart eingestellt wird, dass es unter Verwendung des fünften Loches (51) zu einer Anfangsgeschwindigkeit zurückkehrt,
wodurch, wenn der zweite Betätigungshebel (97) über einen festgelegten Winkel hinaus bewegt wird, das Kabel (24) den Regelkreis (40) zieht, der Regelkreis (40) rotiert und das Endstückteil (56), das dann in der Nut (45) empfangen wird, rotiert, so dass der erste Betätigungshebel (53) den Haken (31) schiebt, so dass der Haken (31) sich aus dem ersten Schaltrad (60) auskuppelt und das erste Schaltrad (60), zusammen mit der ersten mittleren Spindel (21), gerollt wird, um den Drehzahlwechsler (20) zu betätigen und so die Geschwindigkeit zu verändern,
wodurch, wenn der zweite Betätigungshebel (97) weniger als bis zu einem festgelegten Winkel bewegt wird, das Kabel (24) den Regelkreis (40) zieht und das Endstückteil (56) betätigt wird, so dass der erste Betätigungshebel (53) rotiert, um den Haken (31) zu schieben, so dass der Haken (31) aus dem ersten Schaltrad (60) auskuppelt und das erste Schaltrad (60), zusammen mit der ersten mittleren Spindel (21), wieder gegen den Uhrzeigersinn rotiert, um den Drehzahlwechsler (20) zu betätigen und so die Geschwindigkeit zu verändern.

2. Drehzahlwechsler nach Anspruch 1, wobei eine erste Rückgabefeder (37) zwischen der Basis (30) und dem Regelkreis (40) definiert wird, um den Regelkreis (40) zurück in eine Ausgangsstellung rotieren zu lassen.

3. Drehzahlwechsler nach Anspruch 1, wobei der Regelkreis (40) einen Schlitz (43) umfasst, der auf einer Außenseite davon angeordnet ist und ein zweites Loch (44), das auf einer mittleren Position davon angeordnet ist, und das zweite Loch (44) die Nut (45) umfasst, die an einer geeigneten Position einer Außenseite davon befestigt ist, und einen Innenraum, um das erste Schaltrad (60), den ersten Betätigungshebel (53), das Ringelement (50) und den Haken (31) aufzunehmen.

4. Drehzahlwechsler nach Anspruch 1, wobei der Haken (31) den Anhakteil (311) umfasst, der an einem Vorderende davon gebildet ist, eine zweite Öffnung (312) auf einer Rückseite einer Mitte davon, ein distales Endstück (313) und ein Bremsteil (314), die beide an einem Hinterende des Hakens (31) angeordnet sind.

5. Drehzahlwechsler nach Anspruch 1, wobei der erste Betätigungshebel (53) ein Kopfteil (54) umfasst, das auf einem Vorderende davon angeordnet ist, ein Schiebeteil (55), das auf einem mittleren Abschnitt davon befestigt ist, und das Endstückteil (56), das an einem Hinterende davon angebracht ist, um in der Nut (45) gehalten zu werden.

## Revendications

1. Variateur de vitesse arrière (20) d'une bicyclette, comprenant un dispositif d'ajustement de vitesse, **caractérisé par le fait que** le dispositif d'ajustement de vitesse comprend :
une base (30) comprenant un premier trou (302) fixé sur une partie centrale de celle-ci pour introduire un premier axe central (21) du variateur de vitesse arrière (20), un organe de maintien (33) et un élément de montage (34) qui s'étendent à partir d'une extrémité avant de la base (30) pour se relier à une bague d'ajustement (40), et un élément annulaire (50) adapté sur l'élément de montage (34) de façon à être apte à tourner vers la gauche et vers la droite sur l'élément de montage (34), la bague d'ajustement (40) étant retenue sur l'organe de maintien (33), la base (30) étant fixée au variateur de vitesse arrière (20), le premier axe central (21) comprenant un premier arbre ovale (22) disposé sur une extrémité distale de celui-ci, et l'élément annulaire (50) comprenant un quatrième trou (501) disposé sur une partie centrale de celui-ci, un cinquième trou (51) fixé sur une partie de diamètre externe de celui-ci, et un ergot d'oscillation (52) et une monture axiale (521) fixés sur un côté périphérique de celui-ci ;
la bague d'ajustement (40) comprenant une pluralité de premiers alésages de vis se verrouillant avec un couvercle avant (70) et un deuxième trou (44) défini sur une position centrale de celle-ci de façon à recevoir une première roue à rochet (60), un premier levier d'actionnement (53), l'élément annulaire (50) et un crochet (31), la première roue à rochet (60) comprenant un orifice ovale (61) fixé sur une partie centrale de celui-ci pour introduire le premier arbre ovale (22) de telle sorte qu'une rotation de la première roue à rochet (60) peut être transmise au premier axe central (21), le premier levier d'actionnement (53) étant verrouillé de façon rotative à la monture axiale (521) de l'élément annulaire (50), le crochet (31) étant agencé de façon à être apte à s'engager avec et se désengager de la première roue à rochet (60) lors de l'actionnement par le premier levier d'actionnement (53), le deuxième trou (44) comprenant une rainure (45) formée dans une position appropriée d'un côté externe de celui-ci pour recevoir une partie talon (56) du premier levier d'actionnement (53) ; et
le couvercle avant (70) comprenant un premier orifice (72) formé sur une partie centrale de celui-ci pour introduire une première vis (73) de telle sorte qu'un second ressort de rappel (74) est accroché avec la première vis (73) et est fixé dans le variateur de vitesse arrière (20) de telle sorte que le couvercle avant (70), la bague d'ajustement (40) et l'organe de maintien (33) sont pressés sur le variateur de vitesse arrière (20) ;
la base (30) comprenant un siège de câble (32) disposé sur un côté externe de celle-ci et à travers lequel un câble (24) est destiné à passer pour être fixé, au niveau d'une extrémité du câble (24), à la bague d'ajustement (40), l'autre extrémité du câble (24) étant fixée à un second levier d'actionnement (97), et incluant l'organe de maintien (33) et l'élément de montage (34), tous les deux s'étendant vers l'extérieur à partir d'une extrémité avant de la base (30), l'organe de maintien (33) comprenant une colonne (35) fixée sur un côté externe de celui-ci, et la colonne (35) comprenant une ouverture (351) pour recevoir une bille (352) et un ressort (353), une seconde vis (354) étant verrouillée dans l'ouverture (351) pour fixer la bille (352) et le ressort (353) de telle sorte que l'élément annulaire (50) est ajusté pour revenir à une vitesse initiale à l'aide du cinquième trou (51),
ce par quoi, lorsque ledit second levier d'actionnement (97) est déplacé de plus d'un angle fixe, ledit câble (24) tire sur la bague d'ajustement (40), la bague d'ajustement (40) tourne et la partie talon (56), qui est alors reçue dans la rainure (45), tourne de telle sorte que le premier levier d'actionnement (53) pousse le crochet (31), lequel crochet (31) se désengage de la première roue à rochet (60), et la première roue à rochet (60), conjointement avec le premier axe central (21), est amené à tourner pour actionner le variateur de vitesse arrière (20) de façon à changer la vitesse,
ce par quoi, lorsque ledit second levier d'actionnement (97) est déplacé de moins d'un angle fixe, ledit câble (24) tire sur la bague d'ajustement (40) et la partie talon (56) est actionnée de telle sorte que le premier levier d'actionnement (53) tourne pour pousser le crochet (31), lequel crochet (31) se désengage de la première roue à rochet (60), et la première roue à rochet (60), conjointement avec le premier axe central (21), tourne en arrière dans le sens contraire des aiguilles d'une montre pour actionner le variateur de vitesse arrière (20) de façon à changer la vitesse.

2. Variateur de vitesse arrière selon la revendication 1, dans lequel un premier ressort de rappel (37) est défini entre la base (30) et la bague d'ajustement (40) pour amener la bague d'ajustement (40) à tourner en arrière jusqu'à une position d'origine.

3. Variateur de vitesse arrière selon la revendication 1, dans lequel la bague d'ajustement (40) comprend une fente (43) agencée sur un côté externe de celle-ci et un deuxième trou (44) disposé sur une position centrale de celle-ci, et le deuxième trou (44) comprend la rainure (45) fixée dans une position appropriée d'un côté externe de celui-ci et un espace interne pour recevoir la première roue à rochet (60), le premier levier d'actionnement (53), l'élément annulaire (50) et le crochet (31).

4. Variateur de vitesse arrière selon la revendication 1, dans lequel le crochet (31) comprend la partie d'accrochage (311) formée sur une extrémité avant de celui-ci, un second orifice (312) agencé sur un côté arrière d'une section médiane de celui-ci, un talon distal (313) et une partie d'arrêt (314), tous les deux étant disposés sur une extrémité arrière du crochet (31).

5. Variateur de vitesse arrière selon la revendication 1, dans lequel le premier levier d'actionnement (53) comprend une partie tête (54) disposée sur une extrémité avant de celui-ci, une partie de poussée (55) fixée sur une section médiane de celui-ci, et la partie talon (56) attachée sur une extrémité arrière de celui-ci pour être retenue dans la rainure (45).
